# EUROPÄISCHE PATENTANMELDUNG

(11) **EP 4 246 783 A1**
(43) Veröffentlichungstag der Anmeldung: **20.09.2023**
(21) Anmeldenummer: 22162925.6
(22) Anmeldetag: 18.03.2022
(51) Int. Cl.: H02K 9/22

(54) **ELEKTROMOTOR**

(71) Anmelder: Siemens Aktiengesellschaft, 80333 München (DE)
(72) Erfinder: Brütting, Frank, 91054 Erlangen (DE)
(74) Vertreter: Siemens Patent Attorneys

(57) **Zusammenfassung**

Ein Elektromotor mit ständerseitigen Stabwicklungen umfasst eine Mehrzahl von Wechselrichtern zur Ansteuerung der Stäbe, wobei die Wechselrichter auf einer oder mehreren Leiterplatten angeordnet sind, die Leiterplatten auf wenigstens einer Kühlplatte angeordnet sind, wenigstens ein Wärmerohr vorhanden ist, dessen Verdampferseite in der Kühlplatte und dessen Kondensatorseite außerhalb der Kühlplatte angeordnet ist.

## Beschreibung

Die Erfindung betrifft einen Elektromotor mit einer ständerseitigen Stabwicklung.

Elektromotoren können ständerseitig eine Stabwicklung aufweisen. Dabei weist der Ständer (Stator) eine Reihe von Stäben anstelle von gewickelten Drahtleitern als Feldleiter auf. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Dieser hohe Stromfluss erfordert aber durch den geringen Widerstand der Stäbe nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Komponenten der Leistungselektronik beispielsweise auf einer oder mehr Platinen angeordnet werden, die nahe am Elektromotor angeordnet werden.

Zu der hohen Verlustwärme der elektrischen und elektronischen Komponenten, die durch die hohen Stromstärken bedingt ist, kommt also bei einem solchermaßen gestalteten Elektromotor eine hohe Packungsdichte der elektrischen und elektronischen Komponenten. Es ist möglich, dass die an dieser Stelle typischerweise verwendete Luftkühlung oder Wasserkühlung für die anfallende Verlustleistung nicht ausreichend ist.

Es ist Aufgabe der Erfindung, einen Elektromotor anzugeben, der den eingangs genannten Nachteil behebt, insbesondere eine verbesserte Kühlleistung für elektrische und elektronische Komponenten aufweist.

Diese Aufgabe wird durch einen Elektromotor mit den in Anspruch 1 angegebenen Merkmalen gelöst.

Der erfindungsgemäße Elektromotor umfasst einen Stator mit einer Mehrzahl von als Stäbe ausgestalteten Feldleitern. Weiterhin umfasst der Elektromotor eine Mehrzahl von Wechselrichtern zur Ansteuerung der Feldleiter, wobei die Wechselrichter auf einer oder mehreren Leiterplatten angeordnet sind und die Leiterplatten auf wenigstens einer Kühlplatte angeordnet sind. Ferner ist wenigstens ein Wärmerohr vorhanden, dessen Verdampferseite in der Kühlplatte und dessen Kondensatorseite außerhalb der Kühlplatte angeordnet ist.

Durch seine enorme Wärmeleitfähigkeit kann das Wärmerohr auch die in diesem Aufbau anfallenden hohen Mengen an räumlich eng konzentrierter Verlustleistung abtransportieren. Ein forcierter Luftstrom muss zumindest im direkten Umfeld der Leiterplatten nicht erzeugt werden, weshalb bewegte Teil zumindest dort entfallen.

Vorteilhafte Ausgestaltungen des erfindungsgemäßen Elektromotors gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Das Wärmerohr kann geradlinig ausgestaltet sein und bei bestimmungsgemäßer Aufstellung der des Elektromotors mit einer Neigung von wenigstens 10° zur Horizontalen angeordnet sein. Insbesondere kann die Neigung auch wenigstens 20° und in besonderen Ausgestaltungen wenigstens 45° oder wenigstens 60° betragen. Dabei ist die Richtung der Neigung zweckmäßig derart, dass der Kondensator oberhalb des Verdampfers liegt. Da die Neigung zur Horizontalen bei Wärmerohren die Effizienz, also die Wärmeleitung beeinflusst, wird so vorteilhaft eine optimale Effizienz des Wärmerohrs gesichert. Bei einer Neigung von 10° wird dabei abhängig von Typ und Ausgestaltung des Wärmerohrs eine Wärmetransportleistung von 80% oder mehr der maximal möglichen Leistung erreicht, während dieser Wert unterhalb von 10° schnell und stark abfällt.

Die Leiterplatten können kreis- oder ringsektorförmig ausgestaltet sein. Leiterplatten mit dieser Form lassen sich zu einem Kreis oder Ring zusammensetzen und somit optimal an die Form der elektrischen Maschine angepasst an einem axialen Ende der Maschine anordnen, wobei gleichzeitig eine hohe Modularität erreicht wird.

Die Begriffe "axial", "radial" und "tangential" beziehen sich dabei auf die Achse des Rotors und damit auf die entsprechende Symmetrieachse des Stators. Dabei beschreibt "axial" eine Richtung parallel zu dieser Achse, "radial" beschreibt eine Richtung orthogonal zur Achse, auf diese zu oder auch von ihr weg, und "tangential" ist eine Richtung, die in konstantem radialem Abstand zur Achse und bei konstanter Axialposition kreisförmig um die Achse herum gerichtet ist. Der Ausdruck "in Umfangsrichtung" ist mit "tangential" gleichzusetzen.

Werden die Begriffe "axial", "radial" und "tangential" in Bezug auf eine Fläche verwendet, bspw. eine Querschnittsfläche, beschreiben die Begriffe die Orientierung des Normalenvektors der Fläche, d.h. desjenigen Vektors, der senkrecht auf der betroffenen Fläche steht.

Die Kühlplatte kann senkrecht zur Achse der elektrischen Maschine angeordnet sein. Auf diese Weise kann die Kühlplatte mit den Leiterplatten platzsparend an einem axialen Ende der elektrischen Maschine angeordnet werden. Auch eine Mehrzahl von Kühlplatten kann axial versetzt und nahe aneinander angeordnet werden. Gleichzeitig bietet sich so die einfache Möglichkeit, das Wärmerohr oder auch mehrere Wärmerohre bei bestimmungsgemäßer Aufstellung der Maschine senkrecht oder nahezu senkrecht anzuordnen und so einen optimalen Wärmetransport zu erreichen. Weiterhin ist bei einer solche Anordnung ein gleichmäßiger Abstand zwischen Kühlplatte und Leistungselektronik zu den Stäben gegeben, die die Feldleiter bilden, wodurch die Kontaktierung der Stäbe vereinfacht wird.

Die Kühlplatte kann doppelseitig mit Leiterplatten belegt sein. Dadurch wird vorteilhaft eine verbesserte Platzausnutzung erreicht. Das Wärmerohr ist optimal geeignet, den dadurch erhöhten Wärmeeintrag in die Kühlplatte abzutransportieren. Durch die Anzahl der verwendeten Wärmerohre kann eine Anpassung an die Abwärme der Wechselrichterschaltungen vorgenommen werden.

Es kann eine Mehrzahl von Wärmerohren vorhanden sein. Der Elektromotor kann eine Kühlplatte oder mehrere Kühlplatten aufweisen und jede davon kann ein Wärmerohr oder mehrere Wärmerohre aufweisen. Mit einer Mehrzahl von Wärmerohren kann einerseits mehr Wärme abtransportiert werden und andererseits der Wärmeabtransport aus der Kühlplatte gleichmäßiger gestaltet werden, sodass der Temperaturgradient in der Kühlplatte vorteilhaft minimiert wird.

Der Elektromotor kann eine Mehrzahl von Leiterplatten aufweisen. Insbesondere kann eine Mehrzahl von separaten Leiterplatten auf eine Kühlplatte aufgebracht sein. Durch Verteilung auf eine Mehrzahl von Leiterplatten kann die verwendete Leistungselektronik modularisiert werden. So kann unter Verwendung einer Vielzahl von gleichartigen Leiterplatten eine große Anzahl von Umrichtern bereitgestellt werden, wodurch die Herstellung in Bezug auf Ausschuss verbessert wird.

Das Wärmerohr kann auf der Kondensatorseite eine Mehrzahl von Lamellen aufweisen. Die Lamellen bilden einen Kühlkörper aus, der durch seine große Oberfläche bei gleichzeitig geringer thermischer Masse und ausreichender thermischer Leitfähigkeit für eine gute Wärmeabgabe an die Umgebungsluft sorgt. Vorteilhaft ist dabei auch eine gute Durchströmbarkeit für eine effiziente Abgabe der nach außen transportierten Wärme.

Sind die Lamellen für eine passive Durchströmung ausgelegt, muss ihr Abstand ausreichend sein, um den Luftstrom nicht zu sehr zu behindern. Ein Abstand von wenigstens 4 mm ist dafür vorteilhaft. Der Kühlkörper kann aber auch für eine aktive Durchströmung, beispielsweise mit einem oder mehreren Lüftern ausgelegt sein. In diesem Fall kann der Abstand der Lamellen geringer gewählt werden, beispielsweise nur 1 mm.

Wenigstens ein Teil der Lamellen kann in mechanischer Verbindung mit mehreren Wärmerohren stehen. Mit anderen Worten münden mehrere der Wärmerohre in dem durch die Lamellen gebildeten Kühlkörper. Hierdurch wird neben einer mechanischen Stabilisierung der Lamellen auch eine gleichmäßigere Wärmeabgabe und somit ein geringerer Temperaturgradient in der Kühlplatte erreicht.

Die Kühlplatte kann zwei Deckflächen und eine umlaufende Mantelfläche aufweisen, wobei die Leiterplatten auf einer der Deckflächen oder beiden Deckflächen angeordnet sind und wobei das Wärmerohr durch die Mantelfläche hindurch tritt. Die Kühlplatte ist also als im Wesentlichen zylinderförmige Platte ausgestaltet. Hierdurch bleiben die Deckflächen vorteilhaft völlig frei für die Anbringung der Leiterplatten. Weiterhin kann so das Wärmerohr geradlinig durch einen weiten Bereich der Kühlplatte verlaufen, sodass eine hohe mechanische Stabilität und eine optimale Wärmeübertragung von der Kühlplatte auf das Wärmerohr erreicht wird.

Alternativ kann die Kühlplatte zwei Deckflächen und eine umlaufende Mantelfläche aufweisen, wobei die Leiterplatten auf einer der Deckflächen angeordnet sind und wobei das Wärmerohr durch die andere Deckfläche hindurch tritt. Wenn es die Platzverhältnisse erlauben, kann so der Kühlkörper mit den Lamellen in den Bereich hinter der Kühlplatte anstelle von seitlich von der Kühlplatte verlagert werden. Dadurch wird der radiale Platzbedarf der Maschine deutlich reduziert und stattdessen die Länge der Maschine in axialer Richtung erhöht.

Die Wechselrichter können zur Erzeugung einer Wechselspannung mit einer Amplitude von 200 V oder weniger, insbesondere 150 V oder 100 V oder weniger, insbesondere 20 V oder weniger ausgestaltet sein. Die so erzeugte Spannung ist die Spannung, mit der die Feldleiter, also die Statorstäbe beaufschlagt werden. Durch diese vergleichsweise niedrige Spannung wird erst ermöglicht, dass die Komponenten der Wechselrichter sehr nahe zueinander angeordnet werden können. Es können Abstände von etwa 2 mm zwischen den Komponenten wie den LeistungsHalbleiter-Schaltern verwendet werden, wodurch sich eine hohe Packungsdichte der elektronischen Komponenten ergibt und die Möglichkeit, auf vergleichsweise geringem Raum eine Vielzahl von Wechselrichtern anzuordnen. Dadurch wiederum wird es bei geringem Platzbedarf möglich, eine hohe Zahl von Phasen zu verwenden, insbesondere eine Anzahl von Phasen, die der Zahl der Statorstäbe entspricht. So können bei einer entsprechend hohen Zahl von Statorstäben 12, 24 oder auch 48 Phasen verwendet werden.

Im Folgenden wird die Erfindung anhand der in den Figuren dargestellten Ausführungsbeispiele näher beschrieben und erläutert. Es zeigen schematisch:
Figur 1 einen Elektromotor mit zwei Kühlplatten zur Entwärmung von Leiterplatten und mit Wärmerohren zur Entwärmung der Kühlplatte in Seitenansicht,
Figur 2 den Elektromotor in Frontansicht,
Figur 3 eine zweite Ausgestaltungsvariante für die Wärmerohre in Seitenansicht,
Figur 4 die zweite Ausgestaltungsvariante für die Wärmerohre in Frontansicht,
Figur 5 eine Abwandlung der zweiten Ausgestaltungsvariante für die Wärmerohre in Seitenansicht,
Figur 6 die Herausführung der Wärmerohre in der zweiten Ausgestaltungsvariante in Schrägansicht,
Figur 7 die Herausführung in Seitenansicht,
Figur 8 eine dritte Ausgestaltungsvariante für die Wärmerohre in Frontansicht,
Figur 9 eine vierte Ausgestaltungsvariante für die Wärmerohre in Frontansicht,
Figur 10 eine fünfte Ausgestaltungsvariante für die Wärmerohre in Seitenansicht.
Figur 11 eine sechste Ausgestaltungsvariante für die Wärmerohre in Seitenansicht.

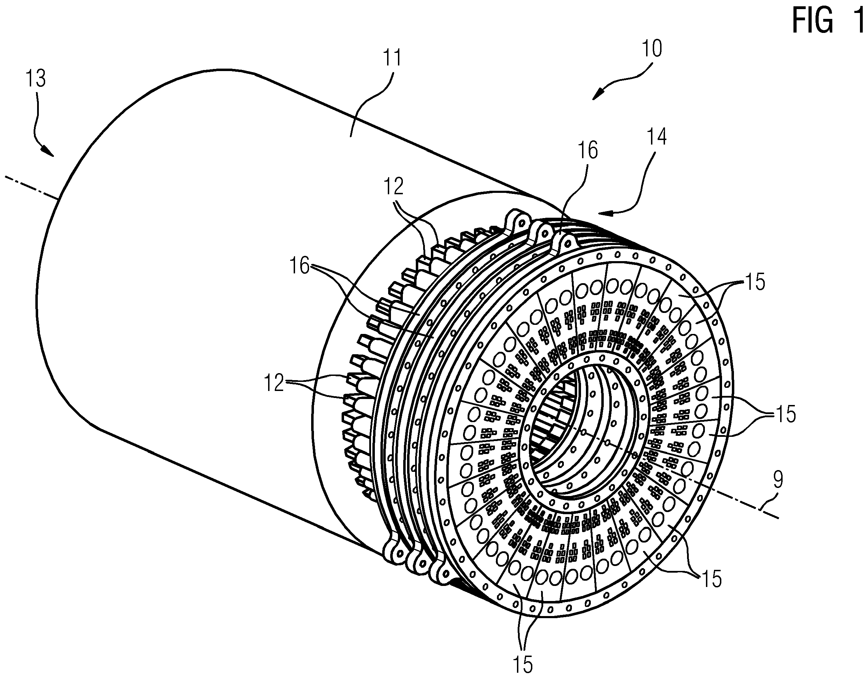

Figur 1 stellt eine isometrische Ansicht eines Elektromotors 10 dar. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem dem bestromten Stator 11 wird der Rotor um eine Achse 9 in Drehung versetzt. Der Rotor ist dabei vom Stator 11 durch einen Luftspalt getrennt.

Der Stator 11 umfasst als Feldleiter eine Mehrzahl von starren und geraden Leiterstäben 12. Diese Leiterstäbe 12 werden sind auf der in Figur 1 abgewandten Stirnseite 13 über einen Kurzschlussring miteinander verbunden. Auf der Rückseite 14 des Elektromotors 10 werden die Leiterstäbe 12 durch jeweils zugehörige Wechselrichtermodule einzeln gespeist. Da es sich bedingt durch die Leiterstäbe 12 um einen bei niedrigen Spannungen betriebenen Elektromotor 10 handelt, können die Wechselrichtermodule sind zusammen mit anderen Komponenten der Elektronik (Gleichspannungswandler, Gleichrichter) verhältnismäßig eng zusammen auf Platinen 15 angeordnet sein. Die Platinen sind dabei in diesem Beispiel ringsektorförmig und viele einzelne Platinen 15 bilden zusammen eine ringförmige Platinenstruktur aus.

Während in den Beispielen davon ausgegangen wird, dass die Platinen 15 Wechselrichtermodule tragen, ist es auch möglich, dass ein Teil der Platinen 15 Gleichrichter und DC/DC-Wandler tragen.

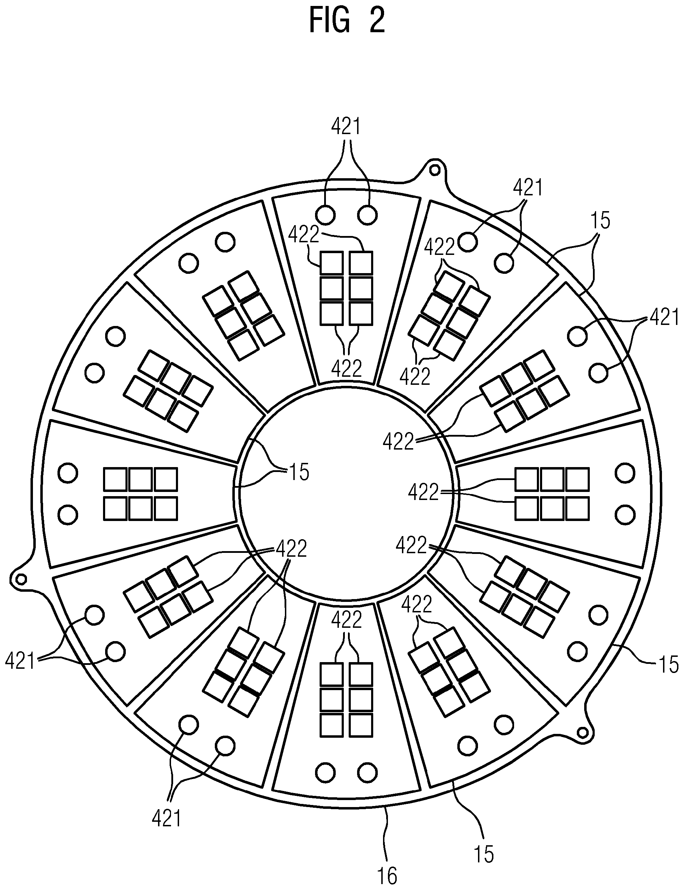

Figur 2 zeigt eine Aufsicht auf eine solche Platinenstruktur. Die Anzahl der in Figur 2 dargestellten Platinen ist dabei für eine bessere Übersichtlichkeit gegenüber dar Darstellung in Figur 1 verringert und stark vereinfacht dargestellt. Die konkrete Anzahl an solchen Platinen 15 hängt von der konkreten Ausgestaltung des Elektromotors 10 ab, insbesondere der Anzahl der Leiterstäbe 12. Jede der Platinen 15 umfasst mehrere Halbleiterschalter 422.

Weiterhin kann ein Teil der Platinen 15 oder alle Platinen 15 in den Figuren nicht dargestellte Treiberschaltungen und andere elektronische Komponenten wie Kondensatoren umfassen. Die Halbleiterschalter 422 sind Leistungshalbleiter wie beispielsweise IGBTs, MOSFETs oder JFETs und können abhängig von der Verschaltung zusätzlich nicht gezeigte Dioden umfassen. Die Halbleiterschalter 422 sind beispielsweise als Halbbrücken verschaltet. Ein nicht gezeigter Kondensator kann beispielsweise einen Zwischenkreiskondensator der Halbbrücken darstellen. Die Halbleiterschalter 422 einer Platine 15 können dabei einer einzelnen Phase zugeordnet sein oder aber mehreren Phasen.

Die Platinen 15 umfassen weiterhin Kontaktstellen 421, an denen die Leiterstäbe 12 angeschlossen sind. Die Platinen 15 werden von scheibenförmigen Kühlplatten 16 getragen, wobei für eine bessere Platzausnutzung die Kühlplatten 16 beidseitig mit Platinen 15 belegt sein können.

Da bei dem Elektromotor 10 verhältnismäßig hohe Ströme in den Leiterstäben nötig sind, sind bevorzugt mehrere Wechselrichter zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente zu den Leiterstäben 12 die Kühlplatten 16 und damit auch die Platinen 15 gleichartig an den Kontaktstellen durchdringen oder im Falle der äußersten Kühlplatte 16 zumindest kontaktieren.

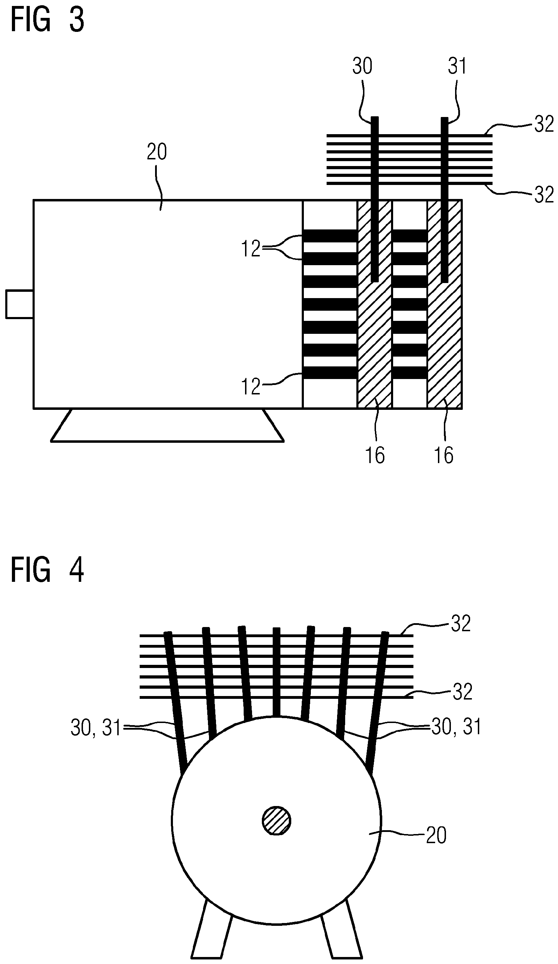

Die Figuren 1 und 2 zeigen keinerlei aktive Maßnahmen zur Entwärmung der leistungselektronischen Komponenten. Diese sind stark vereinfacht in den Figuren 3 bis 6 gezeigt.

Figur 3 zeigt einen beispielhaften Elektromotor 20 mit zwei Kühlplatten 16 zur Wärmespreizung der Verlustwärme der leistungselektronischen Komponenten und mit Wärmerohren 30, 31 zur Entwärmung der Kühlplatten 16 in einer Seitenansicht. Figur 4 zeigt eine Frontansicht desselben Elektromotors 20. Es ist erkennbar, dass jede der Kühlplatten von einer Mehrzahl (hier: 6) Wärmerohren 30, 31 gekühlt wird.

Die Wärmerohre 30, 31 sind dabei mit ihrem verdampferseitigen Ende in die Kühlplatte 16 eingebracht und verlaufen geradlinig durch das Stromrichtergehäuse in den Außenraum. Dabei ist der Verlauf der Wärmerohre 30, 31 bei bestimmungsgemäßer Aufstellung des Elektromotors 20 nahezu senkrecht. Durch eine Anordnung weitab der Horizontalen wird der Wärmetransport der Wärmerohre 30, 31 optimiert.

Eine Rückkühlung der Wärmerohre 30, 31 an deren kondensatorseitigem Ende wird unterstützt durch eine Mehrzahl von Kühl-Lamellen 32. Die Kühl-Lamellen 32 sind dabei in diesem Beispiel so ausgedehnt, dass jede der Kühl-Lamellen 32 mit jedem der Wärmerohre 30, 31 verbunden ist.

Bei den Wärmerohren kann es sich beispielsweise um Kupfer-Wasser-Wärmerohre handeln.

Es ist möglich, in besonderen Ausgestaltungen, die Abgabe der Wärme an die umgebende Luft durch eine aktive Kühlung mit Lüftern zu unterstützen. Weiterhin ist es möglich, einen Teil der Wärmerohre 30, 31 weiter in die jeweilige Kühlplatte 16 hineinragen zu lassen, um die verdampferseitigen Enden der Wärmerohre 30, 31 besser in der Kühlplatte 16 zu verteilen und so eine gleichmäßigere Wärmeabfuhr zu erreichen.

Eine weitere Alternative besteht darin, an der Stelle der Kühl-Lamellen 32 die kondensatorseitigen Enden der Wärmerohre 30, 31 so anzuordnen, dass ein Wärmeaustausch mit dem Stromrichtergehäuse stattfindet.

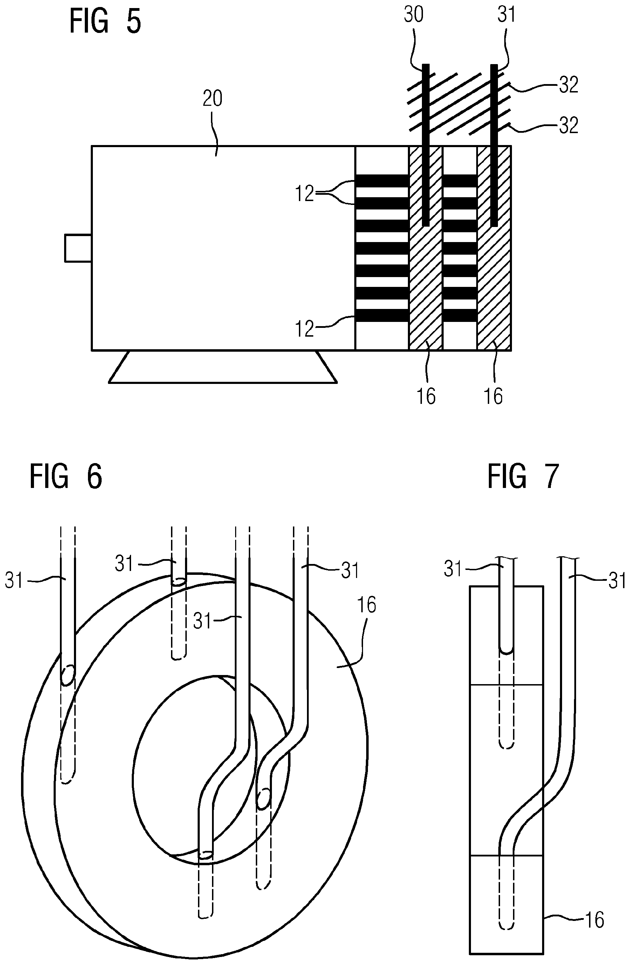

Figur 5 zeigt eine Abwandlung der zweiten Ausgestaltungsvariante. In dieser Abwandlung, die in Seitenansicht gezeigt ist, sind die Kühl-Lamellen 32 in einem Winkel zur Horizontalen angeordnet. Dadurch wird die passive Kühlung verbessert, da der Kamineffekt für eine verbesserte Durchströmung der Kühl-Lamellen 32 mit Luft sorgt.

Diejenigen der Wärmerohre 31, deren verdampferseitiges Ende in oben liegenden Teilen - bei bestimmungsgemäßer Aufstellung des Elektromotors 20 - der Kühlplatte 16 endet, sind geradlinig aus der Kühlplatte 16 herausgeführt. Für diejenigen der Wärmerohre 31, deren verdampferseitiges Ende in unten liegenden Teilen der Kühlplatte 16 endet, würde eine ebensolche Führung der Wärmerohre 31 dazu führen, dass sie auch obere Teile der Kühlplatte 16 durchlaufen.

Da das für die Entwärmung unvorteilhaft ist, ist gemäß einer Ausführungsmöglichkeit, die in den Detailansichten der Figuren 6 und 7 gezeigt ist, vorgesehen, dass solche Wärmerohre 31 im Bereich der zentralen Öffnung durch einen gekrümmten Verlauf aus der Ebene der Kühlplatte 16 herausgeführt sind und dann die weitere Strecke bis zu den Kühl-Lamellen 32 parallel zur Deckfläche der Kühlplatte 16 verlaufen. Dadurch sind die Wärmerohre 31 vorteilhaft nur im Bereich ihrer Verdampferseite mit der Kühlplatte 16 verbunden.

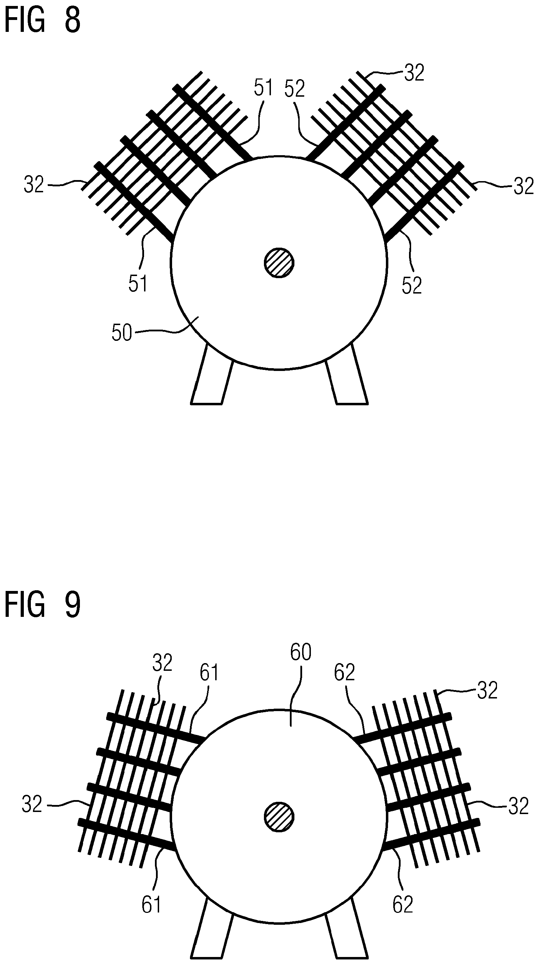

Figur 8 zeigt ein weiteres Ausführungsbeispiel für die Erfindung. Bei dem in Frontansicht gezeigten Elektromotor 50 sind die Wärmerohre 51, 52 in einem Winkel von ca. 40° zur Senkrechten angeordnet und führen nach zwei Seiten aus den Kühlplatten 16 heraus. In diesem Fall umschließen die Kühl-Lamellen 32 nicht mehr alle vorhandenen Wärmerohre 51, 52, sondern nur noch die einer Seite. Durch die veränderte Anordnung der Wärmerohre 51, 52 sind die Kühl-Lamellen 32 nun nicht mehr horizontal angeordnet, sondern ebenfalls um einen Winkel von etwa 40° gegenüber der Horizontalen gekippt. Durch den Kamineffekt ergibt sich hierbei eine verbesserte Durchströmung der Kühl-Lamellen 32 mit Luft und somit eine verbesserte passive Wärmeabfuhr gegenüber dem Ausführungsbeispiel der Figuren 3 und 4.

Figur 9 zeigt ein weiteres Ausführungsbeispiel für die Erfindung. Bei dem in Frontansicht gezeigten Elektromotor 60 sind die Wärmerohre 61, 62 in einem noch größeren Winkel zur Senkrechten als bei dem Beispiel der Figur 8 angeordnet, in diesem Fall ca. 80°. Die Kühl-Lamellen 32 können nun senkrecht angeordnet werden. Der Wärmetransport der Wärmerohre 61, 62 ist durch die fast horizontale Anordnung nicht mehr so gut wie in den vorbeschriebenen Beispielen. Durch den Kamineffekt ergibt sich aber eine optimale passive Durchströmung der Kühl-Lamellen 32 mit Luft und somit eine optimale passive Wärmeabfuhr.

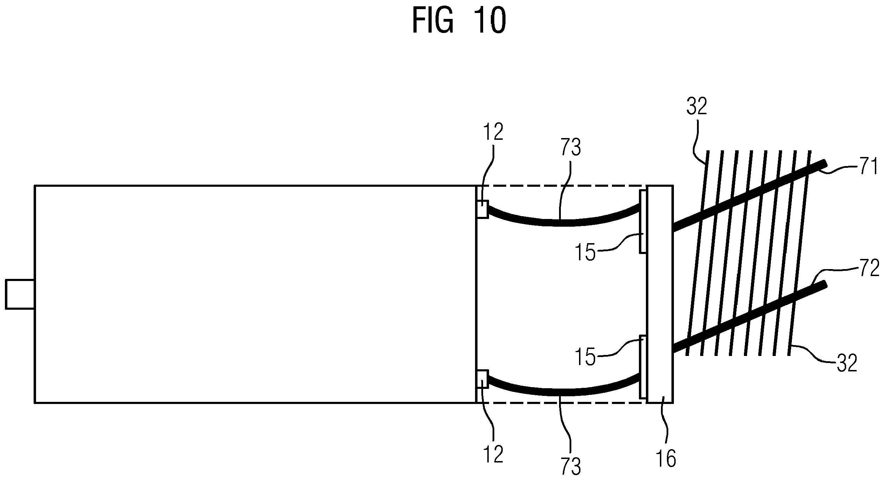

Figur 10 zeigt ein weiteres Ausführungsbeispiel für die Erfindung. Bei dem in Seitenansicht gezeigten Elektromotor 70 sind die Wärmerohre 71, 72 gänzlich anders angeordnet als bei den vorbeschriebenen Ausführungsbeispielen. Die Ausführungsform der Figur 10 eignet sich vor allem für Elektromotoren 70, bei denen nur eine einzelne Kühlplatte 16 vorhanden ist und bei der diese nur auf einer Seite - zum Motor hin - mit Platinen 15 belegt ist. Die Platinen 15 sind in diesem Beispiel mittels Kupferseilen 73 mit den Leiterstäben 12 verbunden.

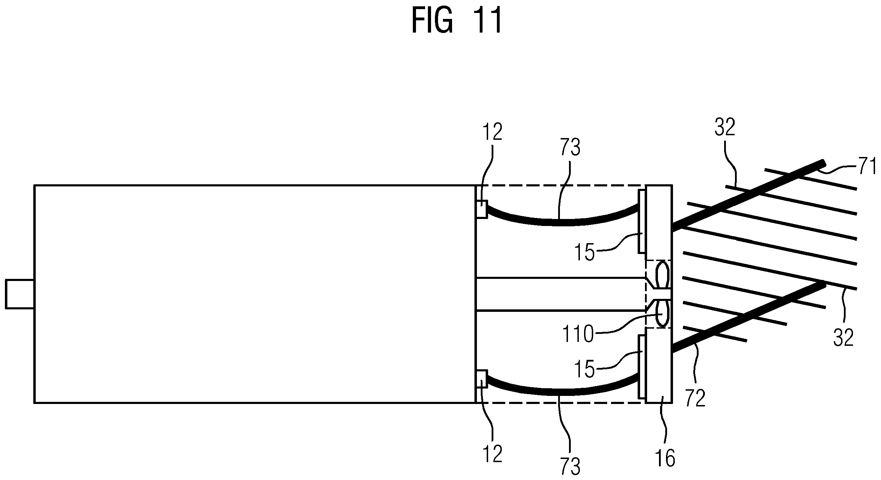

In der Ausführungsform der Figur 10 erstrecken sich die Wärmerohre 71, 72 nicht in der Ebene der Kühlplatte 16, sondern sind vielmehr durch deren Deckelfläche herausgeführt, wobei sie zur motorabgewandten Seite hin orientiert sind. Bei den Wärmerohren 71, 72 handelt es sich in diesem Beispiel um sechs Wärmerohre, die aber in zwei Reihen angeordnet sind und daher in Figur 11 nur als zwei Wärmerohre 71, 72 erscheinen.

Wie bei den anderen Ausführungsformen ist es für den Wärmetransport vorteilhaft, wenn die Wärmerohre 71, 72 bei einer bestimmungsgemäßen Aufstellung des Elektromotors 70 eine Neigung zur Horizontalen aufweisen, wobei sich die Kondensatorseite oberhalb der Verdampferseite befindet. Die Kühl-Lamellen 32 umschließen in diesem Beispiel wieder alle Wärmerohre 71, 72 und ihre Flächennormale ist im Wesentlichen horizontal, was für eine gute Durchströmung mit Luft sorgt.

In diesem Ausführungsbeispiel ergibt sich für den Elektromotor 70 eine gestrecktere Form, bei der die Wärmerohre 71, 72 den Umfang des Elektromotors 70 weniger deutlich erhöhen.

Bei solchen Elektromotoren 70, deren bestimmungsgemäße Aufstellung so ist, dass die Achse 9 in der Senkrechten ist, kann die Ausführungsform der Figur 10 ebenfalls verwendet werden. In diesem Fall können die Wärmerohre 31 senkrecht zur Oberfläche der Kühlplatten 16 herausgeführt werden. Die Kühl-Lamellen 32 wiederum können senkrecht zu den Wärmerohren 31 angeordnet werden, womit sie bei bestimmungsgemäßer Aufstellung letztlich waagrecht wären. Für eine Verbesserung des Luftflusses kann auch hierbei wieder bei der Anordnung der Kühl-Lamellen 32 eine Schrägstellung bevorzugt werden.

Eine aktive Kühlung kann bei einer Ausgestaltung, bei der die Wärmerohre 71, 72 aus der Deckfläche der Kühlplatten 16 herausgeführt sind, bevorzugt durch einen Lüfter 110 erreicht werden, der inmitten der zentralen Öffnung der Kühlplatte 16 angeordnet ist, insbesondere direkt auf der Welle des Elektromotors 70. In diesem Fall ist es vorteilhaft, wenn die Kühl-Lamellen 32 anders als in Figur 10 dargestellt nicht nahezu senkrecht angeordnet sind, sondern vielmehr waagrecht oder nahezu waagrecht, um eine gute Durchströmung mit der vom Lüfter 110 getriebenen Luft zu ermöglichen. Eine solche Ausgestaltung ist in Figur 11 dargestellt.

Während die beschriebenen Beispiele Kühl-Lamellen 32 verwenden zur Entwärmung der Kondensatorseite der Wärmerohre 30, 31, 51, 52, 61, 62, 71, 72, können stattdessen auch Rippenkühler oder Wärmetauscher an die Wärmerohre 30, 31, 51, 52, 61, 62, 71, 72 angebunden sein.

Neben den beschriebenen Aufbauten mit einer einseitigen elektrischen Speisung des Elektromotors 10, 20, 50, 60, 70 besteht auch die Möglichkeit einer beidseitigen elektrischen Speisung. Dabei sind an beiden axialen Enden des Elektromotors 10, 20, 50, 60, 70 Kühlplatten 16 mit Platinen 15 angeordnet. Auch in diesem können die Kühlplatten 16 mit jeweiligen Wärmerohren 30, 31, 51, 52, 61, 62, 71, 72 versehen sein.

Wenn man die Kühl-Lamellen 32 mit Bohrungen für die Stromstäbe zum Motor versieht, dann ist es möglich, die Ausführungsvariante der Figuren 8 oder 9 dahingehend zu erweitern, dass eine Mehrzahl von Kühlplatten 16 vorhanden ist mit jeweiligen Wärmerohren 71, 72 und Kühl-Lamellen 32, wobei die Stromstäbe durch die Bohrungen geführt sind. Dabei ist es möglich, dass die Wärmerohre 71, 72 zur selben Seite aus den Kühlplatten 16 herausgeführt sind. Es ist aber auch in einer alternativen Ausgestaltung möglich, dass die Wärmerohre 71, 72 zweier Kühlplatten 16 zueinander weisend aus den Kühlplatten 16 herausgeführt sind.

### Bezugszeichen

- 9: Motorachse
- 10, 20, 50, 60, 70: Elektromotor
- 11: Stator
- 12: Leiterstäbe
- 13: Stirnseite
- 14: Rückseite
- 15: Platine
- 16: Kühlplatte
- 30, 31, 51, 52, 61, 62, 71, 72: Wärmerohr
- 32: Kühl-Lamellen
- 421: Kontaktstellen
- 422: Halbleiterschalter

## Patentansprüche

1. Elektromotor (10, 20, 50, 60, 70) mit:
- einem Stator (11) mit einer Mehrzahl von als Stäbe (12) ausgestalteten Feldleitern (12),
- einer Mehrzahl von Wechselrichtern zur Ansteuerung der Feldleiter (12),
wobei
- die Wechselrichter auf einer oder mehreren Leiterplatten (15) angeordnet sind,
- die Leiterplatten (15) auf wenigstens einer Kühlplatte (16) angeordnet sind,
- wenigstens ein Wärmerohr (30, 31, 51, 52, 61, 62, 71, 72) vorhanden ist, dessen Verdampferseite in der Kühlplatte (16) und dessen Kondensatorseite außerhalb der Kühlplatte (16) angeordnet ist.

2. Elektromotor (10, 20, 50, 60, 70) nach Anspruch 1, bei dem das Wärmerohr (30, 31, 51, 52, 61, 62, 71, 72) geradlinig ausgestaltet ist und bei bestimmungsgemäßer Aufstellung des Elektromotors (10, 20, 50, 60, 70) mit einer Neigung von wenigstens 10° zur Horizontalen angeordnet ist.

3. Elektromotor (10, 20, 50, 60, 70) nach Anspruch 1 oder 2, bei dem die Leiterplatten (15) kreis- oder ringsektorförmig ausgestaltet sind.

4. Elektromotor (10, 20, 50, 60, 70) nach einem der vorangehenden Ansprüche, bei dem die Kühlplatte (16) senkrecht zur Achse (9) des Elektromotors (10, 20, 50, 60, 70) angeordnet ist.

5. Elektromotor (10, 20, 50, 60, 70) nach einem der vorangehenden Ansprüche, bei dem die Kühlplatte (16) doppelseitig mit Leiterplatten (15) belegt ist.

6. Elektromotor (10, 20, 50, 60, 70) nach einem der vorangehenden Ansprüche mit einer Mehrzahl von Wärmerohren (30, 31, 51, 52, 61, 62, 71, 72).

7. Elektromotor (10, 20, 50, 60, 70) nach einem der vorangehenden Ansprüche, ausgestaltet, die Feldleiter (12) mit wenigstens 6 Phasen anzusteuern.

8. Elektromotor (10, 20, 50, 60, 70) nach einem der vorangehenden Ansprüche mit einer Mehrzahl von Leiterplatten (15).

9. Elektromotor (10, 20, 50, 60, 70) nach einem der vorangehenden Ansprüche, bei dem das Wärmerohr (30, 31, 51, 52, 61, 62, 71, 72) auf der Kondensatorseite mit einer Mehrzahl von Kühl-Lamellen (32) verbunden ist.

10. Elektromotor (10, 20, 50, 60, 70) nach einem der vorangehenden Ansprüche, bei dem wenigstens ein Teil der Kühl-Lamellen (32) in mechanischer Verbindung mit mehreren Wärmerohren (30, 31, 51, 52, 61, 62, 71, 72) stehen.

11. Elektromotor (10, 20, 50, 60, 70) nach einem der vorangehenden Ansprüche, bei der die Kühlplatte (16) zwei Deckflächen und eine umlaufende Mantelfläche aufweist, wobei die Leiterplatten (15) auf einer der Deckflächen oder beiden Deckflächen angeordnet sind und wobei das Wärmerohr (30, 31, 51, 52, 61, 62) durch die Mantelfläche hindurch tritt.

12. Elektromotor (10, 20, 50, 60, 70) nach einem der vorangehenden Ansprüche, bei der die Kühlplatte (16) zwei Deckflächen und eine umlaufende Mantelfläche aufweist, wobei die Leiterplatten (15) auf einer der Deckflächen angeordnet sind und wobei das Wärmerohr (71, 72) durch die andere Deckfläche hindurch tritt.

13. Elektromotor (10, 20, 50, 60, 70) nach einem der vorangehenden Ansprüche, bei der ein oder mehrere Lüfter vorhanden sind zur Erzeugung einer Luftströmung im Bereich der Kühl-Lamellen (32).

14. Elektromotor (10, 20, 50, 60, 70) nach einem der vorangehenden Ansprüche, bei der die Wechselrichter ausgestaltet sind zur Erzeugung einer Wechselspannung mit einer Amplitude von 200 V oder weniger, insbesondere 150 V oder weniger, insbesondere 50 V oder weniger.
